# EUROPÄISCHE PATENTANMELDUNG

(11) **EP 3 501 758 A1**
(43) Veröffentlichungstag der Anmeldung: **26.06.2019**
(21) Anmeldenummer: 17210075.2
(22) Anmeldetag: 22.12.2017
(51) Int. Cl.: B25J 9/16, B29C 64/00

(54) **VERFAHREN ZUR BESTIMMUNG MINDESTENS EINES DRUCKPROZESSPARAMETERWERTS, COMPUTERLESBARES SPEICHERMEDIUM UND ADDITIVE FERTIGUNGSANLAGE**

(71) Anmelder: Heraeus Additive Manufacturing GmbH, 63450 Hanau (DE)
(72) Erfinder: Bauereiss, Andreas, 63452 Hanau (DE)
(74) Vertreter: Kilchert, Jochen

(57) **Zusammenfassung**

Die optimale Bestimmung von Druckprozessparamterwerten für einen Strahlschmelzprozess ist schwierig und erfordert aufwändige Simulationsverfahren die viel Zeit in Anspruch nehmen.

Die Aufgabe wird gelöst durch Verfahren zur Bestimmung mindestens eines Druckprozessparameterwerts (25) für einen Strahlschmelzprozess, Folgendes aufweisend:
- Laden von ersten und zweiten Energiefelddaten (20 ,20') aus einer Speichereinrichtung (11), die jeweils Energiefeldern (E1, E2) mindestens einer Spur (L1, L2, L3) eines Schmelzprozesses zugeordnet sind;
- Bestimmen (33) von Ergebnisenergiefelddaten (24) durch Überlagerung der ersten Energiefelddaten (20) mit den zweiten Energiefelddaten (20');
- Bestimmen (34) mindestens eines Druckprozessparameterwerts (25) für mindestens einen Druckprozessparameter einer additiven Fertigungsanlage (10) unter Verwendung der Ergebnisenergiefelddaten (24).

## Beschreibung

Die Erfindung betrifft ein Verfahren zur Bestimmung mindestens eines Druckprozessparameterwerts für einen Strahlschmelzprozess, ein computerlesbares Speichermedium und eine additive Fertigungsanlage.

Es ist eine Vielzahl von Verfahren bekannt, um dreidimensionale Werkstücke aus einem oder mehreren flüssigen oder festen Werkstoffen herzustellen.

So wird zum Beispiel beim sogenannten "fused deposition modeling" (FDM) ein Werkstück schichtweise aus einem schmelzfähigen Kunststoff aufgebaut. Dabei wird ein drahtförmiger Kunststoff durch Erwärmung und Extrudieren mittels einer Düse auf eine Platte in einem Arbeitsbereich aufgebracht. Durch ein Aushärten des Kunststoffs, können Schichten nacheinander aufeinander aufgetragen werden.

Bei der Stereolithographie (SLA) wird flüssiges Epoxidharz in eine Kammer gefüllt, wobei die Oberfläche des Epoxidharzes mit einem Laser derart punktuell bestrahlt wird, dass das Epoxidharz an den bestrahlten Stellen aushärtet. Nach jedem Belichtungsschritt wird das ausgehärtete Werkstück einige Millimeter in dem Epoxidharz abgesenkt, so dass eine weitere Schicht gedruckt werden kann.

Beim selektiven Lasersintern (SLS) oder selektiven Laserschmelzen (SLM) sowie Elektronenstrahlschmelzen (SEBM) wird in einer Kammer zunächst ein Pulverbett eines pulverförmigen Kunststoffs, eines Metalls oder einer Keramik auf eine Platte aufgetragen. Das Pulverbett stellt eine dünne Schicht des verwendeten Pulvers dar, die z.B. durch Rakeln aufgetragen wird. Das Pulverbett besteht somit aus losen, unverschmolzenen Partikeln. Nach dem Auftragen des Pulverbetts entsteht eine Druckschicht durch selektives Verschmelzen/Versintern der Partikel des Pulverbetts durch einen Laserstrahl bzw. einen Elektronenstrahl. Im nächsten Schritt wird ein weiteres Pulverbett auf die vorherige Druckschicht aufgetragen und in ausgewählten Bereichen selektiv verschmolzen bzw. versintert. Die dadurch erzeugte weitere Druckschicht kann mit einer darunterliegenden Schicht verbunden bzw. verschmolzen sein. Aus der Summe der sequentiell aufgetragenen Druckschichten ergibt sich das fertige Druckerzeugnis. Dabei bilden die Kanten sämtlicher Druckschichten gemeinsam die Kontur des Druckerzeugnisses.

Das selektive Verschmelzen bzw. Versintern erfolgt bevorzugt durch Abrastern des Pulverbetts mittels energiereiche Strahlung. Das Abrastern erfolgt dabei üblicherweise linienförmig innerhalb einer Schicht, sodass einzelne Spuren entstehen, d.h. Schmelzspuren oder Sinterspuren. Diese Spuren verlaufen zumindest im Wesentlichen parallel zueinander, wobei die Spuren an alternierenden Enden miteinander verbunden sei können.

Eine weitere Methode zum Verschmelzen bzw. Versintern des Pulverbetts ist das vielfache, punktuelle Belichten. Dabei können aufeinanderfolgende Schmelzpunkte bzw. Sinterpunkte auch nicht auf einer Linie liegen, sondern quasi willkürlich über das Pulverbett verteilt sein. Optional erfolgt die Verteilung der Schmelzpunkte bzw. Sinterpunkte nach einem festen Muster, z.B. einem Schachbrettmuster. Im Folgenden bezeichnet ein "Punkt" einen Schmelz- oder Sinterpunkt.

Nach Abschluss einer Schicht, wird die Bauplattform geringfügig abgesenkt und eine neue Schicht aufgezogen. Ein Druckerzeugnis entsteht daher aus der Summe der sequentiell aufgetragenen Druckschichten.

Die genannten Verfahren, d.h. SLS, SLM oder SEBM, und Verfahren, die nach ähnlichen Prinzipien arbeiten, werden im Folgenden als Strahlschmelzverfahren bzw. Strahlsinterverfahren bezeichnet. Das Drucken eines Druckerzeugnisses mittels eines Strahlschmelzverfahrens arbeitet daher nach einem Strahlschmelzprozess und das Drucken eines Druckerzeugnisses mittels eines Strahlsinterverfahrens arbeitet daher nach einem Strahlsinterprozses.

Es hat sich herausgestellt, dass insbesondere bei Strahlschmelzverfahren und Strahlsinterverfahren die zu druckende Geometrie von besonderer Bedeutung für die Eigenschaften des Druckerzeugnisses ist. Wird zum Beispiel in nah beieinander liegenden Bereichen in kurzen Abständen Material verschmolzen bzw. versintert, so kommt es zu einer lokalen Überhitzung des Materials. Durch die hohe Temperatur verläuft dort auch die Abkühlung, relativ zu anderen Bereichen im Bauteil, deutlich langsamer, wodurch die Materialeigenschaften des Druckerzeugnisses negativ beeinflusst werden.

Ein ähnliches Verhalten lässt sich beim Verschmelzen bzw. Versintern benachbarter Spuren feststellen. Eine bereits verschmolzene bzw. versinterte Spur hat also einen Einfluss auf die als nächste zu verschmelzende bzw. versinternde Spur. Insgesamt führen die beschriebenen Effekte zu inhomogenen Materialeigenschaften, was sich z.B. durch eine erhöhte Zerbrechlichkeit des Druckerzeugnisses ausdrücken kann.

Die Qualität der Druckerzeugnisse variiert somit stark und führt zu unbefriedigenden Ergebnissen.

Ausgehend von diesem Stand der Technik ist es Aufgabe der vorliegenden Erfindung ein Verfahren zur Bestimmung mindestens eines Druckprozessparameterwerts für einen Strahlschmelzprozess und/oder einen Strahlsinterprozess, ein computerlesbares Speichermedium und eine additive Fertigungsanlage anzugeben, die die vorstehend genannten Nachteile adressieren. Insbesondere ist es Aufgabe der vorliegenden Erfindung, ein Verfahren anzugeben, welches das Drucken mit im Wesentlichen homogenen Materialeigenschaften des Druckerzeugnisses erlaubt. Ferner ist es Aufgabe der vorliegenden Erfindung, ein Verfahren bzw. eine additive Fertigungsanlage anzugeben, das bzw. die den Ausschuss reduziert/en. Darüber hinaus ist es Aufgabe der Erfindung, unabhängig von der zu druckenden Geometrie gleichbleibende Druckergebnisse zu ermöglichen.

Die Aufgabe wird gelöst durch ein Verfahren nach Anspruch 1, ein computerlesbares-Speichermedium nach Anspruch 16 und eine additive Fertigungsanlage nach Anspruch 17.

Insbesondere wird die die Aufgabe gelöst durch ein Verfahren zur Bestimmung mindestens eines Druckprozessparameterwerts für einen Strahlschmelzprozess und/oder einen Strahlsinterprozess, Folgendes aufweisend:
- Laden von ersten und zweiten Energiefelddaten aus einer Speichereinrichtung, die jeweils, insbesondere benachbarten, Energiefeldern mindestens eines Bereichs, insbesondere mindestens einer Spur und/oder mindestens eines Punktes, bevorzug von 10 Spuren, eines Schmelzprozesses bzw. eines Sinterprozesses zugeordnet sind;
- Bestimmen von Ergebnisenergiefelddaten durch, insbesondere numerische, Überlagerung der ersten Energiefelddaten mit den zweiten Energiefelddaten;
- Bestimmen mindestens eines Druckprozessparameterwerts für mindestens einen Druckprozessparameter einer additiven Fertigungsanlage unter Verwendung der Ergebnisenergiefelddaten.

Ein Kern der Erfindung ist, dass die Energiefelder bereits verschmolzener bzw. versinterter Bereiche beim Verschmelzen bzw. Versintern des nächsten Bereichs berücksichtigt werden. Im Folgenden wird das Verschmelzen bzw. das Versintern eines Bereichs zusammengefasst als Drucken eines Bereichs bezeichnet, wobei dabei immer beide Verfahren gemeint sind. Beim Drucken eines Bereichs, kommt es in dem Bereich selbst und auch in seiner Umgebung zu einem Temperaturanstieg. Werden mehr als zwei nebeneinanderliegende Bereiche gedruckt, so kommt es zu einer Überlagerung der Energiefelder der ersten beiden Bereiche an der Stelle, an der der dritte Bereich gedruckt werden soll. Durch sich ändernde Umweltbedingungen, insbesondere eine sich ändernde Temperatur des zu verarbeitenden Materials, führt das Drucken mit konstanten Druckprozessparameterwerten nicht zu optimalen Ergebnissen bzw. konstanten Erzeugniseigenschaften. Es ist daher notwendig, Druckprozessparameterwerte für jeden Bereich einzeln zu bestimmen, wobei sogar innerhalb eines Bereichs, in Abhängigkeit von der zu druckenden Geometrie des Druckerzeugnisses, die Druckprozessparameterwerte geändert werden können.

Ein Bereich kann insbesondere mindestens eine Spur und/oder mindestens einen Punkt angeben.

Ein weiterer Aspekt der Erfindung liegt darin, für Druckprozessparameter, deren Werte während des Druckprozesses nicht änderbar sind, konstante Werte auszuwählen, die zu vorhersagbar guten Ergebnissen führen. Insbesondere kann für den Druckprozessparameter ein Druckprozessparameterwert ausgewählt werden, bei dem mindestens eine Erzeugniseigenschaft einem Anforderungsprofil entspricht. Dabei wird bei der Auswahl des Druckprozessparameterwerts der Temperaturanstieg berücksichtigt.

In einer Ausführungsform können eine Vielzahl von Energiefelddatensätzen, insbesondere von zehn Energiefelddatensätzen, geladen werden, wobei die Überlagerung unter Verwendung der Vielzahl von Energiefelddatensätzen ausgeführt wird, und wobei sich ein stationärer Zustand für die Ergebnisenergiefelddaten einstellt.

Die Energiefelddaten können jeweils zumindest im Wesentlichen eine thermische Energie angeben, insbesondere eine innere Energie. In anderen Ausführungsformen können die Energiefelddaten die Enthalpie eines zugeordneten Bereichs angeben. In einer weiteren Ausführungsform kann das chemische Potential bei der inneren Energie unberücksichtigt bleiben.

Das Temperaturverhalten des Materials kann jeweils für einen Bereich durch Energiefelddaten ausgedrückt werden. Durch das Bestimmen von Ergebnisenergiefelddaten kann die Temperatur des zu verarbeitenden Materials in dem dritten Bereich prognostiziert werden, sodass ein Druckprozessparameterwert entsprechend dem Temperaturverhalten oder entsprechend dieser Temperatur ausgewählt werden kann. Somit ist es möglich, konstante und vorhersehbare Druckergebnisse zu erzielen.

Die genannten Bereiche können Bereiche einer einzelnen Schicht sein und/oder Bereiche unterschiedlicher Schichten. Dies ist von Vorteil, da das Temperaturverhalten selbstverständlich auch auf anderen Schichten, insbesondere darunter und/oder darüber liegende Schichten, ausstrahlt.

In einer Ausführungsform kann das Verfahren ein Berechnen mindestens einer Prozessfensterkarte für mindestens einen Druckprozessparameter unter Verwendung der Ergebnisenergiefelddaten umfassen, wobei der mindestens eine Druckprozessparameterwert unter Verwendung der mindestens einen Prozessfensterkarte bestimmt werden kann.

Die mindestens eine Prozessfensterkarte kann eine Abbildung von dem mindestens einen Druckprozessparameter auf mindestens eine Erzeugniseigenschaft angeben.

Eine Prozessfensterkarte ermöglicht es, für gegebene Druckprozessparameterwerte schnell einen Erzeugniseigenschaftswert zu bestimmen. Durch eine Prozessfensterkarte ist es ebenfalls möglich, für einen gewünschten Erzeugniseigenschaftswert, einen entsprechenden Druckprozessparameterwert zu bestimmen. Durch das Berechnen einer Prozessfensterkarte ist es somit möglich, konstante Erzeugniseigenschaften zu garantieren. In einer Ausführungsform können Prozessfensterkarten für mindestens einen über den Druckprozess konstanten Druckprozessparameterwert mit mindestens einer Erzeugniseigenschaft korreliert werden. Daraufhin kann der mindestens eine Druckprozessparameterwert derart bestimmt werden, dass die mindestens eine Erzeugniseigenschaft in einem bevorzugten Bereich liegt.

Oftmals sind Druckprozessparameter während des Prozesses aus technischen oder physikalischen Gründen nicht beliebig einstellbar. Beispielsweise ist die Änderung der Strahlleistung mit einer gewissen Reaktionszeit verbunden und Änderungen der Strahlgeschwindigkeit unterliegen der Massenträgheit der Strahloptik. Es ist also von Vorteil, wenn ein konstanter Druckprozessparameterwert ausgewählt wird, der über den gesamten Druckprozess zu guten Erzeugniseigenschaften führt.

Eine Erzeugniseigenschaft kann insbesondere die Erzeugnisdichte, die Porosität, die Mikrostruktur, die Oberflächenrauheit, die Eigenspannung, den Verzug, die Legierungszusammensetzung, die Prozesszeit, eine Rissneigung und/oder die Herstellungskosten angeben.

In einer Ausführungsform kann das Überlagern der ersten Energiefelddaten mit den zweiten Energiefelddaten das Bestimmen einer Strahlkontaktpunkttemperatur umfassen, wobei die Strahlkontaktpunkttemperatur, insbesondere die Temperatur an der Oberfläche eines Erzeugnisses, zu einem bestimmten Zeitpunkt an einer bestimmten Position angibt.

Durch das Bestimmen einer Strahlkontaktpunkttemperatur kann die Temperatur an der Position, an der ein Energiestrahl, z.B. Laserstrahl oder Elektronenstrahl, auf das zu verschmelzende Material trifft, bestimmt werden. Damit kann der Druckprozessparameterwert auf die Strahlkontaktpunkttemperatur abgestimmt werden, wodurch bessere Schmelzergebnisse bzw. Sinterergbenisse erreicht werden.

Des Weiteren können unter Verwendung der Strahlkontaktpunkttemperatur die ersten und/oder die zweiten Energiefelddaten geladen werden. Es können dann genau solche Energiefelddaten geladen werden, die zu Energiefeldern korrespondieren, die bei der bestimmten Strahlkontaktpunkttemperatur gemessen, erstellt oder simuliert wurden. Anschließend kann beim Bestimmen der Ergebnisenergiefelddaten ein der Strahlkontaktpunkttemperatur entsprechender Energiegehalt von den Energiefelddaten entfernt bzw. abgezogen werden.

Es können also die Energiedfelddaten, die zu laden sind, besser bestimmt werden, wodurch letztendlich bessere Schmelzergebnisse bzw. Sinterergebnisse erreicht werden.

In einer Ausführungsform kann das Verfahren umfassen:
- Erzeugen von Simulationsdaten durch Simulation mindestens eines Energiefelds;
- Anpassen der Simulationsdaten an Experimentdaten, die Ergebnisse von Aufschmelzversuchen und/oder Sinterversuchen angeben, insbesondere durch Ausführung eines random sample consensus (RANSAC) Algorithmus und/oder durch Kreuzkorrelation;
- Erzeugen der ersten Energiefelddaten unter Verwendung der angepassten Simulationsdaten; und
- Speichern der ersten Energiefelddaten in der Speichereinrichtung.

Die Energiefelddaten können in der beschrieben Ausführungsform unter Verwendung von experimentellen Daten und Simulationsdaten bestimmt werden. Durch das Kombinieren der Daten aus Experimenten und Simulationen können besonders gute Ergebnisse erzielt werden. Die Simulationsdaten können dabei besonders effizient mittels einer Kreuzkorrelation an die experimentell bestimmten Daten angepasst werden.

In einer Ausführungsform kann zu den ersten und/oder den zweiten Energiefelddaten jeweils eine Basistemperatur zugeordnet sein, insbesondere gespeichert sein, wobei die Ergebnisenergiefelddaten unter Berücksichtigung der jeweiligen Basistemperatur bestimmt werden können.

Die Basistemperatur kann z.B. durch das Entfernen bzw. Abziehen der der Strahlkontaktpunkttemperatur entsprechenden Energie bestimmt werden. Durch das Zuordnen einer Basistemperatur zu den Energiefelddaten kann der Einfluss, den ein Schmelzvorgang bzw. Sintervorgang hat, genauer bestimmt werden. Somit können auch die Ergebnisenergiefelddaten genauer bestimmt werden, wodurch die Erzeugnisqualität zunimmt.

In einer Ausführungsform kann das Erzeugen der Simulationsdaten umfassen:
- Bestimmen von mindestens ersten und zweiten Simulationsrohdaten, die jeweils ein Energiefeld (E1, E2) zu unterschiedlichen Zeitpunkten und/oder mit mindestens einem unterschiedlichen Druckprozessparameterwert (25) und/oder unterschiedlicher Basistemperatur angeben können;
- Erzeugen der Simulationsdaten (21) durch numerische Überlagerung der mindestens ersten und zweiten Simulationsrohdaten für einen Zeitpunkt und/oder mindestens einen Druckprozessparameterwert und/oder eine Basistemperatur, der bzw. die sich von den zu den Simulationsrohdaten zugeordneten Zeitpunkten, Druckprozessparameterwerten und/oder Basistemperaturen unterscheidet bzw. unterscheiden können.

Durch die Überlagerung mehrere simulierter Simulationsrohdaten ist es möglich, Simulationsdaten für Zeitpunkte bzw. Konfigurationen zu bestimmen, die nicht explizit simuliert sind. Die Überlagerung führt zu einer Art Interpolation der simulierten Daten. Dadurch wird einerseits viel Rechenzeit dadurch eingespart, dass weniger Energiefelder simuliert werden müssen und andererseits wird weniger Speicher zur Speicherung von Simulationsdaten verbraucht.

In einer Ausführungsform können die ersten und die zweiten Energiefelddaten als Matrizen, insbesondere als Vektoren, bevorzugt als Liste bzw. als Array, gespeichert werden.

Die genannten Speichermöglichkeiten bieten eine besonders effiziente Speicherung der Energiefelddaten, die ein einfaches Laden/Speichern und /oder Manipulieren der Daten erlauben.

In einer Ausführungsform kann das Verfahren ein Bestimmen von Ergebnistemperaturfelddaten unter Verwendung der Ergebnisenergiefelddaten umfassen, wobei die Prozessfensterkarte unter Verwendung der Ergebnistemperaturfelddaten bestimmt werden kann.

Durch das Bestimmen von Ergebnistemperaturfelddaten, die das Temperaturverhalten unmittelbar angeben können, ist es sehr schnell möglich, die Druckprozessparameterwert zu bestimmen.

Es sind eine Reihe unterschiedlicher Druckprozessparametern denkbar. In einer Ausführungsform kann der mindestens eine Druckprozessparameter
- einen Strahldurchmesser;
- eine Strahlleistung;
- eine Strahlgeschwindigkeit;
- einen Abstand benachbarter Spuren bzw. benachbarter Punkte; eine nominelle Pulverschichtdicke;
- eine Korngröße eines zu verschmelzenden bzw. zu versinternden Pulvers und/oder
- eine Bauraumtemperatur
angeben.

In einer Ausführungsform kann das Verfahren ein Steuern einer additiven Fertigungsanlage zur Fertigung eines Erzeugnisses unter Verwendung des mindestens einen Druckprozessparameterwerts umfassen.

Es ist also möglich, eine additive Fertigungsanlage unmittelbar unter Verwendung des Druckprozessparameterwerts zu steuern. Hierzu kann in einer Ausführungsform das Verfahren ein Übertragen des Druckprozessparameterwerts an eine/die additive Fertigungsanlage, insbesondere über das Internet, ein Intra- und/oder Extranet umfassen.

Es ist also nicht notwendig, dass ein Computer oder mobiles Endgerät, wie Smartphone oder Laptop, unmittelbar in der Nähe der additiven Fertigungsanlage vorhanden ist. Vielmehr können verteilte Systeme aufgebaut werden, die es erlauben von einem Computer aus, eine Vielzahl von additiven Fertigungsanlagen zu steuern.

In einer Ausführungsform kann das Verfahren ein Erstellen eines Meta-Modells, insbesondere durch Interpolation von Werten einer diskrete Werte umfassenden Prozessfensterkarte umfassen, wobei das Meta-Modell eine Beziehung zwischen mindestens einer Erzeugniseigenschaft und mindestens einem Druckprozessparameter angibt, wobei das Bestimmen des mindestens eines Druckprozessparameterwerts unter Verwendung des Meta-Modells ausgeführt werden kann.

Eine Prozessfensterkarte kann eine diskrete Abbildung darstellen, wobei einem einzelnen Druckprozessparameterwert ein Erzeugniseigenschaftswert zugewiesen wird. Es können also nur vorher festgelegte Werte abgefragt werden. Durch Interpolation dieser Werte kann nun ein Meta-Modell erzeugt werden, welches es erlaubt, beliebige Werte abzufragen. Ein Meta-Modell kann daher als eine kontinuierliche Funktion, insbesondere eine injektive oder bijektive Funktion, betrachtet werden, die einem Druckprozessparameterwert einen Erzeugniseigeschaftswert zuweist.

Durch das Erstellen des Meta-Modells können deutlich feinere Abstufungen in der Parametrierung einer additiven Fertigungsanlage vorgenommen werden.

Die Aufgabe wird ferner gelöst durch ein computerlesbares Speichermedium, welches Instruktionen enthält, die mindestens einen Prozessor dazu veranlassen ein Verfahren, wie es vorstehend beschrieben wurde, zu implementieren, wenn die Instruktionen durch den mindestens einen Prozessor ausgeführt werden.

Die Aufgaben wird ebenfalls gelöst durch eine additive Fertigungsanlage, Folgendes aufweisend:
- eine Speichereinrichtung, insbesondere ein Speichermedium, wie vorstehend beschrieben;
- einen Prozessor, der dazu ausgebildet ist, in der Speichereinrichtung gespeicherte Instruktionen auszuführen;
- eine Strahlenquelle,
wobei der Prozessor dazu ausgebildet ist, die Strahlenquelle unter Verwendung eines Druckprozessparameterwerts zu Konfigurieren.

Es ergeben sich ähnliche oder identische Vorteile, wie sie bereits im Zusammenhang mit dem Verfahren beschrieben wurden.

Weitere Ausführungsformen ergeben sich aus den Unteransprüchen.

Im Folgenden werden Ausführungsbeispiele der Erfindung anhand von Figuren näher erläutert. Dabei zeigen
- Figur 1:: eine Prinzipdarstellung eines additiven Fertigungsverfahrens;
- Figur 2:: eine schematische Darstellung einer additiven Fertigungsanlage;
- Figur 3: Eine schematische Darstellung, die die Überlagerung von Energiefeldern von Schmelzspuren zeigt;
- Figur 4:: ein Flussdiagram, welches das Speichern von Energiefelddaten in einer Datenbank zeigt;
- Figur 5:: ein Flussdiagram, welches das Bestimmen eines Durckprozessparameterwerts zeigt;
- Figur 6:: eine schematische Darstellung einer Prozessfensterkarte;
- Figur 7:: ein Flussdiagram, welches ein Verfahren zum Steuern einer Fertigungsanlage zeigt.

Im Folgenden werden für gleiche oder ähnliche Gegenstände dieselben Bezugsziffern verwendet.

Die folgenden Ausführungsbeispiele beschreiben das Drucken mehrere Spuren. Im Rahmen dieser Erfindung sind sämtliche beschriebene Konzepte auch auf das Drucken von einzelnen Punkten anwendbar.

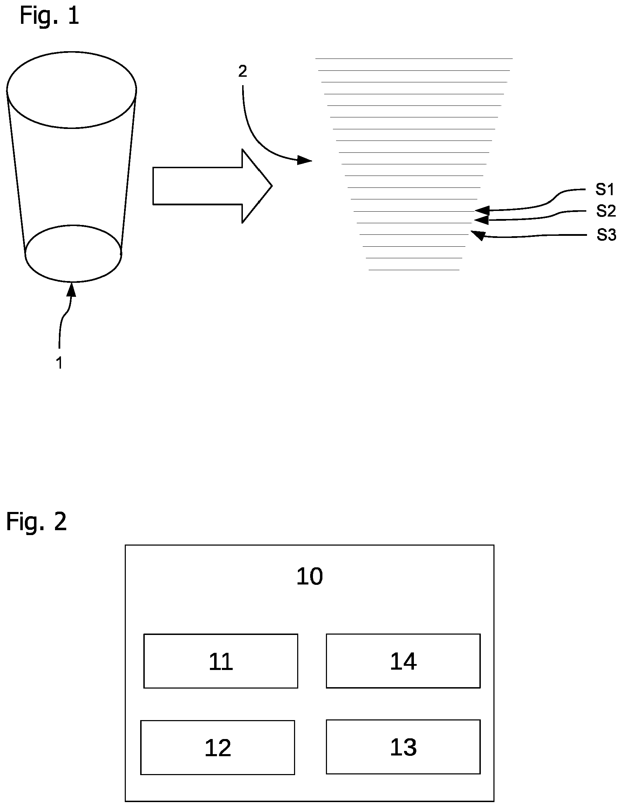

Fig. 1 zeigt schematisch das Drucken eines Objekts 1. Dabei werden Objektdaten, die das Objekt 1 beschreiben als CAD-Daten bereitgestellt. Es können hierzu verschiedene Datenformate, wie z.B. IGES oder STL, eingesetzt werden. Anschließend werden die Objektdaten "gesliced". Das bedeutet, dass eine Software Ojektdaten in eine Vielzahl von zu druckendenden Schichten zerlegt. Aus den "gesliceten" Objektdaten wird in einem Ausführungsbeispiel anschließend, z.B. in einem sog. Build-Prozessor, maschinenlesbarer Code erzeugt, der von einer additiven Fertigungsanlage 10 (siehe Fig. 2), z.B. einem 3D-Drucker, gelesen werden kann.

Das Druckerzeugnis 2 wird beim Drucken aus einer Vielzahl von Druckschichten S1, S2, S3 aufgebaut. Zum Beispiel wird beim SLS-Verfahren wie oben bereits beschrieben, immer eine Druckschicht S1, S2, S3 durch das selektive Verschmelzen eines Pulvers hergestellt. Die dabei erzeugten Schmelzbahnen sind genauso angeordnet, dass ein stabiler Materialverbund entsteht. So wird Schicht für Schicht das Druckerzeugnis 2 aufgebaut.

Fig. 2 zeigt eine schematische Darstellung einer additiven Fertigungsanlage 10, die zum Erstellen eines Druckerzeugnisses 2 eingesetzt werden kann, wie es bezüglich Fig. 1 beschrieben ist.

Die additive Fertigungsanlage 10 umfasst zumindest einen Prozessor 12, eine Speichereinrichtung 11, eine Hebevorrichtung 14 und eine Strahlenquelle 13. In einem weiteren Ausführungsbeispiel ist ferner ein Netzwerkadapter vorgesehen, der dazu ausgebildet ist, die additive Fertigungsanlage 10 mit dem Internet, einem Intra- oder Extranet zu verbinden. Dabei können verschiedene Parameterwerte, wie Druckprozessparameterwerte über das Netzwerk empfangen werden. Mittels der empfangenen Parameterwerte kann die additive Fertigungsanlage 10 parametriert bzw. konfiguriert werden. Es ist somit einerseits möglich, Parameterwerte von einem Server zu empfangen, andererseits ist es aber auch möglich, Parameterwerte von einer anderen additiven Fertigungsanlage zu empfangen. Somit ist es für einen Betreiber von mehr als einer additiven Fertigungsanlage 10 einfach möglich, Einstellungen auf alle oder einen Teil seiner Anlagen zu kopieren.

Die Speichereinrichtung 11 ist dazu ausgebildet, Instruktionen zu speichern, die bei Ausführung durch den Prozessor 12, den Prozessor 12 dazu veranlassen, die Strahlenquelle 13 zu steuern. Bei der Strahlenquelle 13 kann es sich z.B. um eine Laserquelle oder eine Elektronenstrahlquelle handeln. Bei der additiven Fertigungsanlage 10 der Fig. 2 kann es sich also um eine Fertigungsanlage für einen Strahlschmelzprozess oder auch für einen Sinterprozess handeln. Die Speichereinrichtung 11 ist weiter dazu ausgebildet, Druckprozessparameterwerte zu speichern, die die Steuerung der Strahlenquelle 13 parametrieren. Z.B. können die Druckprozessparameterwerte den Strahlendurchmesser, die Strahlleistung und/oder einen Abstand benachbarter Spuren angeben. Ferner kann eine Strahlgeschwindigkeit, also die Geschwindigkeit, mit der sich der Strahl über das zu verschmelzende Pulver bewegt, durch einen Druckprozessparameter angegeben werden. Neben Druckprozessparametern, die der Strahlenquelle 13 zugeordnet sind, sind weitere Druckprozessparameter vorgesehen, die der Hebevorrichtung 14 zugeordnet sind. Zum Beispiel kann ein Druckprozessparameterwert die nominelle Pulverschichtdicke des Pulverbetts angeben.

Im Folgenden wird die Erfindung für das Drucken unterschiedlicher Spuren im Einzelnen beschrieben. Sämtliche Ausführungsbeispiele bzw. Ausführungsformen sind jedoch auch für das Drucken einzelner Punkte anwendbar. Die Begriffe Punkte und Spuren sind daher im Wesentlichen als äquivalent in Bezug auf die Erfindung zu verstehen.

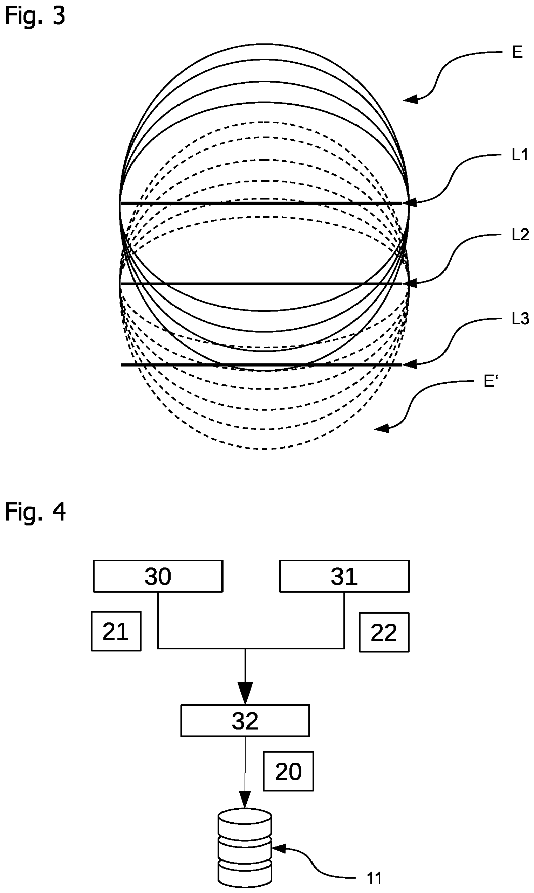

Die Fig. 3 zeigt eine schematische Darstellung von drei Spuren L1, L2, L3. Die Spuren L1, L2, L3 sind nacheinander aufgetragen, wobei die Spur L1 vor der Spur L2 aufgetragen ist. Die Spur L3 wiederum ist zeitlich nach der Spur L2 aufgetragen. Beim Auftragen der Spuren L1, L2, L3, entsteht für jede der Spuren L1, L2, L3 ein temperaturabhängiges Energiefeld E, E'. In der Fig. 3 sind zur besseren Übersicht lediglich die Energiefelder E, E' der Spuren L1, L2 dargestellt. Wenn die erste Spur L1 aufgetragen wird, dann erhöht sich die Temperatur des zu schmelzenden bzw. zu versinternden Materials bzw. des Materials in der Spur L1 selbst und in einer Umgebung um die Spur L1 herum. Somit ist vor dem Auftragen der Spur L2, die Temperatur des zu schmelzenden Materials in der Spur L2 erhöht, da die Spuren benachbart sind bzw. nahe beieinander liegen.

Ebenso verhält es sich bei der Spur L3, wobei hier die Einflüsse der Schmelzvorgänge bzw. Sintervorgänge der Spuren L1 und L2 zu berücksichtigen sind, die einen gemeinsamen Einfluss auf die Temperatur des zu schmelzenden bzw. versinternden Materials der Spur L3 haben. Der Erfindung liegt die Überlegung zu Grunde, die Druckprozessparameter entsprechend den erfolgten Schmelzvorgängen bzw. Sintervorgänge in der Umgebung einer aufzutragenden Spur L1, L2 anzupassen. Z.B. kann die Strahlintensität verringert werden, wenn das zu schmelzende bzw. zu versinternde Material schon sehr heiß ist. Ziel ist es in den meisten Fällen, gleichmäßige Materialeigenschaften des fertigen Druckerzeugnisses 2 zu gewährleisten.

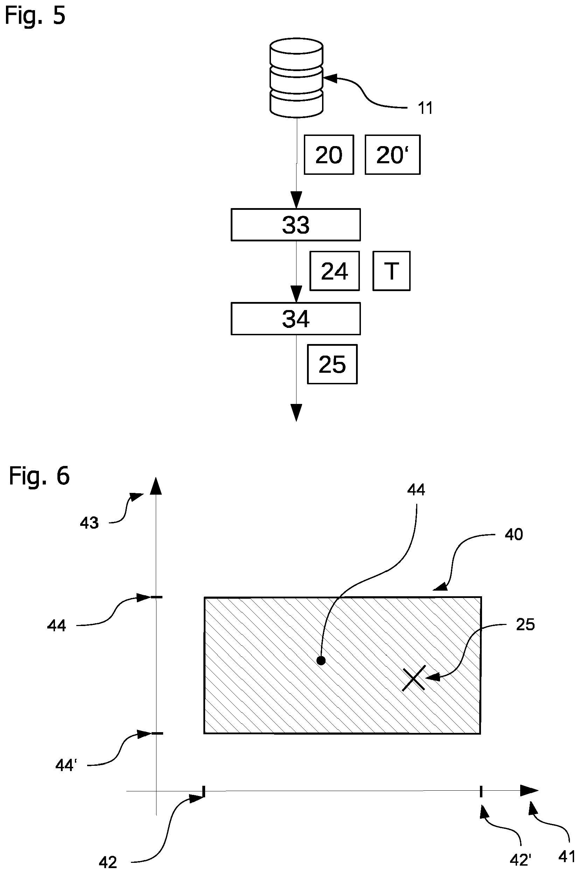

Die Erfindung wird nun anhand der Figuren 4 und 5 näher erläutert. Die Figur 4 zeigt ein Flussdiagram, welches ein Verfahren zum Speichern von Energiefelddaten 20 angibt. In einem Simulationsschritt 30 wird das Auftragen einer einzelnen Spur L1, L2, L3 simuliert. Dabei wird insbesondere die Enthalpie durch bekannte numerische Simulationsverfahren simuliert, z.B. Verfahren, die auf der Lattice-Boltzmann Methode basieren. In einem weiteren Ausführungsbeispiel wird zur Vereinfachung die Kompressibilität der Navier-Stokes-Gleichungen und der Konvektions-Diffusionsgleichung vernachlässigt. D.h. die Simulation wird auf die Simulation der inneren Energie reduziert. Auch diese Simulation kann weiter vereinfacht werden, wenn das chemische Potential nicht mitsimuliert wird. Auch im letztgenannten Fall liefert die Simulation immer noch ausreichend genaue Ergebnisse. Somit sind verschiedene Simulationsverfahren gegeben, die je nach verfügbarer Rechenleistung vereinfacht werden können.

Die durch die Simulation gewonnenen Simulationsrohdaten umfassen in einem Ausführungsbeispiel für jede Spur den verwendeten Satz von Druckprozessparameterwerten und eine Basistemperatur, wobei für die entsprechenden Druckprozessparameterwerte und Basistemperaturen Energiefelddaten zu diskreten Zeitpunkten berechnen werden. Es entsteht für eine einzelne Spur also eine Liste von Energiefelddatensätzen.

Für die Simulationsrohdaten einer einzelnen Spur wird in einem Ausführungsbeispiel ein Objekt einer objektorientierten Programmiersprache erzeugt, wobei das Objekt Daten und Funktionen als Eigenschaften aufweisen kann. Die Objekte wiederum werden in einer entsprechenden Datenstruktur gespeichert.

Die Simulationsrohdaten können aus der Datenstruktur unter Verwendung einer Abfragefunktion abgefragt werden. Dabei können Simulationsrohdaten in Abhängigkeit eines Zeitpunkts und eines Volumens im Raum unter Verwendung der Abfragefunktion abgefragt werden. Das Abfragen der Simulationsrohdaten kann das Interpolieren der gespeicherten Simulationsrohdaten umfassen, sodass die Auflösung der von der Abfragefunktion zurückgegebenen Daten von der Auflösung der gespeicherten Simulationsrohdaten abweichen kann.

Darüber hinaus ist die Abfragefunktion derart ausgebildet, dass sie für jeden abfragten Zeitpunkt die Simulationsrohdaten für zwei nacheinander liegende Zeitpunkte zurückgibt. Dies ist vorteilhaft, da üblicherweise der abgefragte Zeitpunkt nicht exakt den berechneten Zeitpunkten entspricht. Selbstverständlich ist es daher auch möglich, dass die Simulationsrohdaten für mehr als zwei Zeitpunkte zurückgegeben werden. Für einen Wert X, der angibt, für wie viele Zeitpunkte Simulationsrohdaten zurückgegeben werden sollen, können in einem Ausführungsbeispiel für einen Zeitpunkt t die Daten zu den Zeitpunkten von t-X/2 bis t+X/2 zurückgegeben werden.

In gleicher Weise können die Simulationsrohdaten unterschiedliche Strahlkontakttemperaturen und Druckprozessparameterwerte von den gespeicherten Werten abweichen, sodass auch hier mindestens zwei Datensätze zurückgegeben werden.

Wenn Simulationsrohdaten für genau zwei Zeitpunkte, zwei Strahlkontakttemperaturen und zwei Druckprozessparameterwerte, wie z.B. zwei Leistungswerte einer Elektronenstrahlquelle, zurückgegeben werden, dann werden also insgesamt acht Datensätze zurückgegeben.

In einem Ausführungsbeispiel werden die zurückgegebenen Simulationsrohdaten zusätzlich auf eine gemeinsame Oberfläche angepasst. Dies kann deswegen nötig sein, weil z.B. ein Schmelzbad nach den Prinzipien der Hydrodynamik in Bewegung ist.

Jeder der Datensätze von Simulationsrohdaten definiert also üblicherweise eine unterschiedliche Oberfläche. Für die acht oder mehreren Datensätze kann daher zunächst eine gemeinsame Oberfläche mittels eines gewichteten Mittelwerts bestimmt werden. Im Anschluss werden die acht Datensätze derart verzerrt, dass sie eine Oberfläche angeben, die der gemeinsamen Oberfläche entspricht.

Im Anschluss können diese acht Datensätze von Simulationsrohdaten nun numerisch überlagert werden und so die Simulationsdaten 21 bilden.

Die Speicherung der Simulationsrohdaten ist sehr aufwendig. Es ist daher möglich, nur einen kurzen Zeitraum zu simulieren und eine Extrapolation für weitere Zeitpunkte durchzuführen. Dadurch können die Anforderungen an notwendigen Speicher niedrig gehalten werden. Die Extrapolation entspricht dabei einer räumlichen Streckung oder Dehnung des zuletzt simulierten Energiefeldes um einen Faktor, der proportional zur thermischen Diffusionslänge zum gegebenen Zeitpunkt ist.

Darüber hinaus umfasst das dargestellte Verfahren einen Experimentalschritt 31, in dem Spuren L1, L2, L3 einzeln aufgetragen werden. Durch Messungen können die Energiefelder der Spuren L1, L2, L3 bestimmt werden. Dabei werden die bei den Experimenten aufgebrachten Spuren L1, L2, L3 mit denselben Druckprozessparameterwerten aufgebracht, wie sie im Simulationsschritt 30 verwendet wurden, sodass die Simulation einer Spur L1, L2, L3 einer Spur L1, L2, L3 des Experimentalschritts 31 zugeordnet werden kann. Da Experimente sehr aufwendig sind, wird in einem Ausführungsbeispiel lediglich eine Teilmenge der Simulationsdaten auch experimentell bestimmt. Insbesondere werden Energiefelddaten zu 16 Spuren experimentell bestimmt und die Energiefeldfelder zu 500-4000 Spuren.

Die Simulationsdaten 21werden in einem Anpassungsschritt 32 an Experimentdaten 22, die mindestens ein experimentell bestimmtes Energiefeld angeben, angepasst. Das Energiefeld eines Experiments kann in einer Ausführungsform z.B. durch Vermessung des Querschliffs einer Spur dadurch bestimmt werden, dass die Aufschmelzlinie mit der Isotherme der Soliduslinie und/oder Liquiduslinie von entsprechenden Simulationsdaten korreliert wird.

Das Anpassen kann anschließend mittels Kreuzkorrelation durchgeführt werden. Auch eine Modellfindung mittels eines RANSAC Algorithmus ist möglich. Es werden somit in dem Anpassungsschritt 32 Energiefelddaten 20 erzeugt, die unter Berücksichtigung der experimentellen und der Simulationsdaten 21, 22 erstellt sind. Dies sorgt für eine besonders gute Robustheit des Verfahrens.

Die in dem Anpassungsschritt 32 erzeugten Energiefelddaten 20 werden für die spätere Verwendung in einer Datenbank 11 gespeichert. Das Verfahren der Fig. 4 wird für eine sehr große Anzahl von Spuren L1, L2, L3 durchgeführt, wobei Druckprozessparameter wie das zu verschmelzende bzw. zu versinternde Material oder die weiter oben genannten Druckprozessparameter variiert werden. Das Verfahren der Fig. 4 kann zu einem beliebigen Zeitpunkt vor dem eigentlichen Druckvorgang ausgeführt werden. Auch kann die Datenbank 11 über einen Webserver bereitgestellt werden, sodass die Daten jederzeit von einem beliebigen Ort aus abgefragt werden können, beispielsweise über eine entsprechende API.

Die Verwendung der durch das Verfahren der Figur 4 erzeugten Energiefelddaten 20 wird nun mit Bezug auf die Figur 5 beschrieben. Soll ein neues Erzeugnis 2 gedruckt werden, so werden für die erste zu druckende Spur Standarteinstellungen für die Druckprozessparameter festgelegt, die von einer Basistemperatur des zu verschmelzenden bzw. versinternden Materials ausgehen. Dabei kann bereits für die erste Spur L1 eine Prozessfensterkarte 40 herangezogen werden, wie sie im Zusammenhang mit Figur 6 beschrieben ist.

Nach dem Aufbringen der ersten Spur L1 werden, bevor eine zweite Spur L2 aufgebracht wird, Energiefelddaten 20 aus der Datenbank 11 ausgelesen, die mittels zumindest im Wesentlichen identischen Druckprozessparametern erstellt sind, wie die erste Spur L1. Dadurch ist es möglich, den Einfluss die die erste Spur L1 auf die Region, in der die zweite Spur L2 aufgebracht werden soll, zu bestimmen. Zum Beispiel kann ein Temperaturanstieg in der Region der zweiten Spur L2 bei der Wahl der Strahlintensität berücksichtigt werden. Das heißt ein Druckprozessparameterwert kann entsprechend den Energiefelddaten 20 der benachbarten Spur L1 angepasst werden.

Die Figur 5 zeigt insbesondere den Fall, dass bereits zwei Spuren L1, L2 aufbracht sind und nun eine dritte Spur L3 aufgebracht werden soll.

Zum Aufbringen der dritten Spur L3 werden erste und zweite Energiefelddaten 20, 20' aus der Datenbank 11 ausgelesen. Die ersten und zweiten Energiefelddaten 20, 20' sind jeweils einer der bereits aufgebrachten Spuren L1, L2 zugeordnet. In einem Bestimmungsschritt 33 werden Ergebnisenergiefelddaten 24 durch numerische Überlagerung der ersten und zweiten Energiefelddaten 20, 20' bestimmt. Es wird also ermittelt, welchen kombinierten Einfluss die den ersten und zweiten Energiefelddaten 20, 20' zugeordneten Energiefelder E, E' auf die Region haben, in der die dritte Spur L3 aufgebracht werden soll. Dabei wird insbesondere Ermittelt, wie sich die Temperatur T in der Region der dritten Spur L3 zeitlich entwickelt.

Basierend auf der Temperatur T und den Ergebnisenergiefelddaten 24 wird im Schritt 34 ein Druckprozessparameterwert 25 bestimmt. Z.B. kann bei einer gegenüber der Basistemperatur erhöhten Temperatur T eine geringere Strahlleistung und/oder eine erhöhte Strahlgeschwindigkeit als Druckprozessparemeterwert 25 eingestellt werden, verglichen mit einer zuvor gedruckten Spur.

Zur Auswahl von Druckprozessparameterwerten 25 können daher Prozessfensterkarten 40 verwendet werden. Fig. 6 zeigt eine schematische Darstellung einer Prozessfensterkarte 40. Die Fig. 6 zeigt ein Koordinatensystem, welches durch die zwei Achsen 43, 41 aufgespannt wird. Die Prozessfensterkarte 40 gibt den Zusammenhang von einzelnen Werten der Druckprozessparameter 41 zu Erzeugniseigenschaftswerten 44, 44' an. Im dargestellten Ausführungsbeispiel wird lediglich eine Erzeugniseigenschaft 43 dargestellt.

In anderen Ausführungsbeispielen kann eine Prozessfensterkarte 40 einen mehrdimensionalen Parameterraum angeben, der den Zusammenhang einer Vielzahl von Druckprozessparametern zu einer Vielzahl von Erzeugniseigenschaften angibt.

Eine Prozessfensterkarte 40 kann auf unterschiedliche Art erstellt werden. Z.B. kann ein Prozessfensterkarte 40 experimentell erstellt werden. Zum experimentellen Bestimmen einer Prozessfensterkarte 40 werden eine Vielzahl von Druckerzeugnissen 2 unter Verwendung unterschiedlicher Druckprozessparameterwerte 25 gedruckt. Die Druckerzeugnisse 2 können dann in einem Labor untersucht werden, so dass die Erzeugniseigenschaftwerte genau bestimmt werden.

In einem Ausführungsbeispiel kann die Prozessfensterkarten 40 durch Simulationsverfahren bestimmt werden. Bei bekannten Zusammenhängen von Druckprozessparametern 41 zu Erzeugniseigenschaften 43 kann solch eine Simulation durchgeführt werden. Somit kann teuren Experimenten vorgebeugt werden.

In einem weiteren Ausführungsbeispiel kann die Prozessfensterkarte 40 unter Verwendung von Ergebnistemperaturfelddaten 24 erstellt werden. Dabei wird bei der Erstellung der Prozessfensterkarte 40 der Einfluss, z.B. von der Temperatur, benachbarter Spuren L1, L2, auf die aufzutragenden Spur L3 berücksichtigt.

Eine Prozessfensterkarte 40 stellt eine diskrete Menge von Druckprozessparameterwerten 25 und zugehörigen Erzeugniseigenschaftswerten dar. Ferner kann die Prozessfensterkarte 40 Angaben darüber enthalten, welche Druckprozessparameterwerte 42, 42' einen akzeptablen Qualitätsbereich 44 angeben. Druckprozessparameterwerte, die außerhalb des Qualitätsbereichs 44 liegen, führen zu ungenügenden Erzeugnissen. Ein Qualitätsbereich 44 wird z.B. durch zwei oder mehr Grenzwerte 44, 44' angegeben. Die Grenzwerte 44, 44' geben dann die äußeren Grenzen des Qualitätsbereich 44 an.

Aus der Prozessfensterkarte 40 kann ferner ein Meta-Modell 40 erstellt werden. Die diskreten Punkte der Prozessfensterkarte 40 können über bekannte Verfahren, z.B. die Splicing-Interpolation oder das Trainieren eines neuronalen Netzes, in ein kontinuierliches Meta-Modell überführt werden.

Es ist also auch möglich, dass der Druckprozessparameterwert 25 unter Verwendung eines Meta-Modells ausgewählt wird.

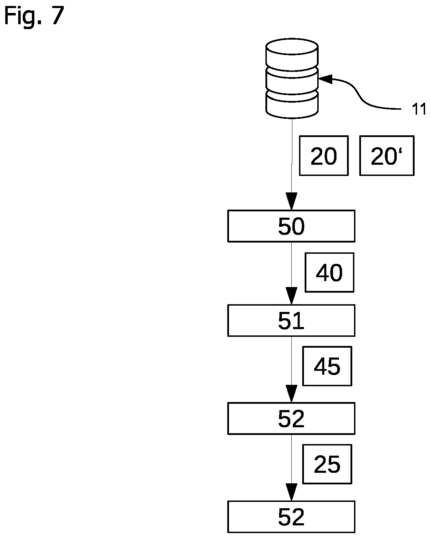

Die Figur 7 zeigt ein weiteres Ausführungsbeispiel, bei dem eine additive Fertigungsanlage 10 durch einen Druckprozessparameterwert 25 gesteuert wird. Zunächst werden aus einer Datenbank 11 erneut zwei Sätze von Energiefelddaten 20, 20' ausgelesen, die jeweils benachbarten Spuren L1, L2 einer aufzutragenden Spur L3 zuordenbar sind.

Im Schritt 50 wird unter Verwendung der Energiefelddaten 20, 20' eine Prozessfensterkarte 40 erstellt. Dabei werden im Schritt 50 Ergebnisenergiefelddaten 24 bestimmt, die wie bezüglich Figur 6 beschrieben, zur Erstellung einer Prozessfensterkarte 40 verwendet werden können. Im Schritt 51 wird durch die Werte aus der Prozessfensterkarte 40 mittels Interpolation, ein Meta-Modell 45 berechnet.

Mittels des Meta-Modells 45 wird im Schritt 52 ein Druckprozessparameterwert 25 für das Aufbringen einer einzelnen Spur L3 bestimmt. Dabei wird eine gewünscht Erzeugniseigenschaft durch den Benutzer festgelegt und ein entsprechender Druckprozessparameterwert 25 bestimmt.

Im Schritt 52 wird eine additive Fertigungsanlage 10 unter Verwendung des bestimmten Druckprozessparameterwerts 25 eingestellt und gesteuert.

### Bezugszeichenliste

- 1: Objekt/Tasse
- 2: Druckerzeugnis
- 10: 3D-Drucker/additive Fertigungsanlage
- 11: Speichereinrichtung/Datenbank
- 12: Prozessor/Recheneinrichtung
- 13: Strahlenquelle
- 14: Hebevorrichtung
- 20, 20': Energiefelddaten
- 21: Simulationsdaten
- 22: Experimentdaten
- 23: Energiefelddaten
- 24: Ergebnisenergiefelddaten
- 25: Druckprozessparameterwert
- 30: Simulationsschritt
- 31: Experimentalschritt
- 32: Anpassungsschritt
- 33: Bestimmungsschritt für Ergebnisfelddaten
- 34, 53: Bestimmungsschritt für Druckprozessparameter
- 40: Prozessfensterkarte
- 41: Druckprozessparameter
- 42, 42': Druckprozessparametergrenzwert
- 43: Erzeugniseigenschaft
- 44, 44': Erzeugniseigenschaft-Grenzwert
- 45: Meta-Modell
- 50: Schritt zum Erstellen einer Prozessfensterkarte
- 51: Interpolationsschritt
- 52: Schritt zur Bestimmung
- 54: Steuerschritt
- S1, S2, S3: Druckschichten
- E, E': Energiefeld
- T: Strahlkontaktpunkttemperatur
- L1, L2, L3: Spur

## Patentansprüche

1. Verfahren zur Bestimmung mindestens eines Druckprozessparameterwerts (25) für einen Strahlschmelzprozess und/oder einen Strahlsinterprozess, Folgendes aufweisend:
- Laden von ersten und zweiten Energiefelddaten (20 ,20') aus einer Speichereinrichtung (11), die jeweils, insbesondere benachbarten, Energiefeldern (E1, E2) mindestens eines Bereichs (L1, L2, L3), insbesondere mindestens einer Spur und/oder mindestens eines Punktes, bevorzugt von 10 Spuren, eines Schmelzprozesses bzw. Strahlsinterprozesses zugeordnet sind;
- Bestimmen (33) von Ergebnisenergiefelddaten (24) durch, insbesondere numerische, Überlagerung der ersten Energiefelddaten (20) mit den zweiten Energiefelddaten (20');
- Bestimmen (34) mindestens eines Druckprozessparameterwerts (25) für mindestens einen Druckprozessparameter einer additiven Fertigungsanlage (10) unter Verwendung der Ergebnisenergiefelddaten (24).

2. Verfahren nach Anspruch 1,
**gekennzeichnet durch**:
Berechnen mindestens einer Prozessfensterkarte (40) für mindestens einen Druckprozessparameter (41) unter Verwendung der Ergebnisenergiefelddaten (24), wobei der mindestens eine Druckprozessparameterwert (25) unter Verwendung der mindestens einen Prozessfensterkarte (40) bestimmt wird.

3. Verfahren nach einem der vorhergehenden Ansprüche, insbesondere nach Anspruch 2,
**dadurch gekennzeichnet, dass**
eine/die mindestens eine Prozessfensterkarte (40) eine Abbildung von dem mindestens einem Druckprozessparameter (41) auf mindestens eine Erzeugniseigenschaft (43) angibt.

4. Verfahren nach einem der vorhergehenden Ansprüche,
**dadurch gekennzeichnet, dass**
das Überlagern der ersten Energiefelddaten (20) mit den zweiten Energiefelddaten (20') das Bestimmen einer Strahlkontaktpunkttemperatur (T) umfasst, wobei die Strahlkontaktpunkttemperatur (T) insbesondere die Temperatur an der Oberfläche eines Erzeugnisses (2) zu einem bestimmten Zeitpunkt an einer bestimmten Position angibt.

5. Verfahren nach einem der vorhergehenden Ansprüche,
**dadurch gekennzeichnet, dass**
die Energiefelddaten (20, 20') jeweils zumindest im Wesentlichen eine thermische Energie angeben, insbesondere eine innere Energie.

6. Verfahren nach einem der vorhergehenden Ansprüche,
**gekennzeichnet durch**
- Erzeugen von Simulationsdaten (21) durch Simulation mindestens eines Energiefelds (E, E');
- Anpassen der Simulationsdaten (21) an Experimentdaten (22), die Ergebnisse von Aufschmelzversuchen und/oder Sinterversuchen angeben, insbesondere durch Ausführung eines random sample consensus (RANSAC) Algorithmus und/oder durch Kreuzkorrelation;
- Erzeugen der ersten Energiefelddaten (20, 20') unter Verwendung der angepassten Simulationsdaten; und
- Speichern der ersten Energiefelddaten (20, 20') in der Speichereinrichtung (11).

7. Verfahren nach einem der vorhergehenden Ansprüche,
**dadurch gekennzeichnet, dass**
zu den ersten und/oder den zweiten Energiefelddaten (20, 20') jeweils eine Basistemperatur zugeordnet, insbesondere gespeichert, ist und wobei die Ergebnisenergiefelddaten (20, 20') unter Berücksichtigung der jeweiligen Basistemperatur bestimmt werden.

8. Verfahren nach einem der vorhergehenden Ansprüche, insbesondere nach Anspruch 7,
**dadurch gekennzeichnet, dass**
das Erzeugen der Simulationsdaten (21) umfasst:
- Bestimmen von mindestens ersten und zweiten Simulationsrohdaten, die jeweils ein Energiefeld (E1, E2) eines simulierten Schmelzprozesses zu unterschiedlichen Zeitpunkten und/oder mit mindestens einem unterschiedlichen Druckprozessparameterwert (25) und/oder unterschiedlicher Basistemperatur angeben;
- Erzeugen der Simulationsdaten (21) durch numerische Überlagerung der mindestens ersten und zweiten Simulationsrohdaten für einen Zeitpunkt und/oder mindestens einen Druckprozessparameterwert und/oder eine Basistemperatur, der bzw. die sich von den zu den Simulationsrohdaten zugeordneten Zeitpunkten, Druckprozessparameterwerten und/oder Basistemperaturen unterscheidet bzw. unterscheiden.

9. Verfahren nach einem der vorhergehenden Ansprüche,
**dadurch gekennzeichnet, dass**
die ersten und die zweiten Energiefelddaten (20, 20') als Matrizen, insbesondere als Vektoren, bevorzugt als Liste bzw. als Array, gespeichert werden.

10. Verfahren nach einem der vorhergehenden Ansprüche,
**gekennzeichnet durch**
Bestimmen von Ergebnistemperaturfelddaten (24) unter Verwendung der Ergebnisenergiefelddaten (20, 20'), wobei die Prozessfensterkarte (40) unter Verwendung der Ergebnistemperaturfelddaten (24) bestimmt wird.

11. Verfahren nach einem der vorhergehenden Ansprüche, insbesondere nach Anspruch 3,
**dadurch gekennzeichnet, dass**
eine/die Erzeugniseigenschaft (43) eine Erzeugnisdichte, eine Porosität, eine Mikrostruktur, eine Oberflächenrauheit, eine Eigenspannung, einen Verzug, eine Legierungszusammensetzung, eine Prozesszeit, eine Rissneigung, eine Korngröße eines zu verschmelzenden Pulvers und/oder Herstellungskosten angibt.

12. Verfahren nach einem der vorhergehenden Ansprüche, insbesondere nach Anspruch 3,
**dadurch gekennzeichnet, dass**
der mindestens eine Druckprozessparameter (41)
- einen Strahldurchmesser;
- eine Strahlleistung;
- eine Strahlgeschwindigkeit;
- einen Abstand benachbarter Spuren bzw. benachbarter Punkte;
- eine nominelle Pulverschichtdicke; und/oder
- eine Bauraumtemperatur
angibt.

13. Verfahren nach einem der vorhergehenden Ansprüche,
**gekennzeichnet durch**
Steuern (52) einer additiven Fertigungsanlage (1) zur Fertigung eines Erzeugnisses (2) unter Verwendung des mindestens einen Druckprozessparameterwerts (25).

14. Verfahren nach einem der vorhergehenden Ansprüche,
**gekennzeichnet durch**
Übertragen des mindestens einen Druckprozessparameterwerts (25) an eine additive Fertigungsanlage (1), insbesondere über das Internet, ein Intra- und/oder Extranet.

15. Verfahren nach einem der vorhergehenden Ansprüche,
**gekennzeichnet durch**
Erstellen eines Meta-Modells (45), insbesondere durch Interpolation (51) von Werten einer diskrete Werte umfassenden Prozessfensterkarte (40), wobei das Meta-Modell (45) eine Beziehung zwischen mindestens einer Erzeugniseigenschaft (43) und mindestens einem Druckprozessparameter (41) angibt, wobei das Bestimmen des mindestens eines Druckprozessparameterwerts (25) unter Verwendung des Meta-Modells (45) ausgeführt wird.

16. Computerlesbares Speichermedium (11), welches Instruktionen enthält, die mindestens einen Prozessor (12) dazu veranlassen ein Verfahren nach einem der vorhergehenden Ansprüche zu implementieren, wenn die Instruktionen durch den mindestens einen Prozessor (12) ausgeführt werden.

17. Additive Fertigungsanlage (10), Folgendes aufweisend:
- eine Speichereinrichtung (11), insbesondere ein Speichermedium nach Anspruch 16;
- einen Prozessor (12), der dazu ausgebildet ist, in der Speichereinrichtung (11) gespeicherte Instruktionen auszuführen;
- eine Strahlenquelle (13),
wobei
der Prozessor (12) dazu ausgebildet ist, die Strahlenquelle (13) unter Verwendung von mindestens einem Druckprozessparameterwert zu konfigurieren.
